# EUROPÄISCHE PATENTSCHRIFT

(11) **EP 2 597 418 B1**
(45) Veröffentlichungstag und Bekanntmachung des Hinweises auf die Patenterteilung: **31.12.2014**
(21) Anmeldenummer: 12193632.2
(22) Anmeldetag: 21.11.2012
(51) Int. Cl.: G01B 5/213, G01B 21/10

(54) **Vorrichtung zur Messung des Durchmessers oder Radius eines Werkstücks**
Device for measuring the diameter or radius of a workpiece
Dispositif de mesure du diamètre ou du rayon d'une pièce à usiner

(30) Priorität: 23.11.2011 DE 102011055650
(43) Veröffentlichungstag der Anmeldung: 29.05.2013
(73) Patentinhaber: Huselstein, Ralf, 66333 Völklingen (DE)
(72) Erfinder: Huselstein, Ralf, 66333 Völklingen (DE)
(74) Vertreter: Bernhardt, Reinhold

(56) Entgegenhaltungen:
- DE-C- 942 172
- DE-T5-112009 002 415
- GB-A- 2 433 120
- US-A- 2 855 687
- US-A- 6 079 113

## Beschreibung

Die Erfindung betrifft eine Vorrichtung zur Messung des Durchmessers oder Radius eines rundzylindrischen, insbesondere durch eine Drehmaschine bearbeiteten Werkstücks, mit einem Haltebügel, der unter Ausrichtung zu einer das Werkstück senkrecht zur Zylinderachse schneidenden Ebene an das Werkstück ansetzbar ist, und einer mit dem Haltebügel verbundenen Messeinrichtung zur Erfassung der Höhe (h) eines die Querschnittsfläche des Werkstücks in dieser Ebene begrenzenden Kreisbogenabschnitts über der Sehne dieses Kreisbogenabschnitts.

Zur Bestimmung des Durchmessers rundzylindrischer Werkstücke werden Messvorrichtungen eingesetzt, die das Werkstück an diametral gegenüberliegenden Punkten antasten. Die Einsatzmöglichkeiten solcher Messgeräte sind auf verhältnismäßig kleine Durchmesser beschränkt. Optische Messsysteme oder Lasermesssysteme, wie sie bei sehr großen Drehteilen, z.B. Kurbelwellen von Schiffsmotoren, eingesetzt werden, sind ortsgebunden und ein Standortwechsel zu einer anderen Bearbeitungsmaschine ist nur mit großem Aufwand durchführbar.

Messvorrichtungen zur Durchmesserbestimmung großer Drehteile, welche jeweils die eingangs genannten Merkmale aufweisen, gehen aus der DE 942 172 C, der GB 2 433 120 A, der US 2 855 687 A und der US 6 079 113 A hervor.

Die DE 11 2009 002 415 T5 beschreibt eine ähnliche Vorrichtung mit einem Haltebügel, der unter Ausrichtung zu einer das Werkstück senkrecht zur Zylinderachse schneidenden Ebene an das Werkstück ansetzbar ist, wobei der Haltebügel mit einer Vielzahl von in einer Reihe angeordneten Messeinrichtungen, welche die Oberfläche des Werkstücks abtasten, verbunden ist.

Der Erfindung liegt die Aufgabe zugrunde, ein neues Messgerät zur hoch genauen Bestimmung des Durchmessers oder Radius zylindrischer Werkstücke zu schaffen, das im Vergleich zu dem zu messenden Durchmesser deutlich kleinere Abmessungen aufweist und leicht handhabbar und transportierbar ist.

Die diese Aufgabe lösende Vorrichtung nach der Erfindung ist dadurch gekennzeichnet, dass die Messeinrichtung einen auf dem Haltebügel parallel zu der Sehne verfahrbaren Messfühler umfasst.

Vorteilhaft kann der Messfühler je nach Größe des zu messenden Durchmessers bei der Messung über größere oder kleinere bekannte Strecken (a) verschoben werden.

Vorteilhaft braucht sich eine solche Vorrichtung nur über einen kleinen Teil des halben Umfangs des Werkstücks zu erstrecken und ist damit sowohl leicht handhabbar als auch leicht transportierbar.

Die Messeinrichtung kann zur Erfassung der Höhe (h) des Kreisbogenabschnitts über dessen Sehne bei bekannter Länge (s) der Sehne vorgesehen sein. Zusätzlich kann die Messeinrichtung neben der Höhe des Kreisbogenabschnitts auch die Länge der Sehne erfassen. In beiden Fällen lässt sich die Länge des Durchmessers aus der bekannten Höhe (h) und der **bekannten** Sehnenlänge (s) ermitteln.

In einer Vorrichtung gemäß der ersten Alternative ist der Haltebügel vorzugsweise über zwei feste Tastpunkte, deren Verbindungslinie die Sehne bildet, an das Werkstück anlegbar und ein Messfühler der Messeinrichtung tastet die Kreisbogenabschnitthöhe (h) in definierten Abständen zu den Tastpunkten ab, vorzugsweise die maximale Hohe (h) auf der zwischen den Tastpunkten verlaufenden Symmetrielinie.

Zur Verschiebung des Messfühlers kann insbesondere ein Stellantrieb vorgesehen sein, der den Messfühler über eine vorgegebene Fahrlänge verschiebt oder dessen zurückgelegte Fahrlänge während der Verschiebung laufend ermittelt.

In einer besonders bevorzugten Ausführungsform der Erfindung ist eine das Signal des Messfühlers auswertende Einrichtung vorgesehen, z.B. ein Personalcomputer, welche bzw. welcher die der maximalen Höhe des Kreisbogens entsprechende Fahrposition des Messfühlers ermittelt. Dies kann dadurch geschehen, dass der Messfühler über die maximale Höhe hinweg hin und her bewegt wird.

Insbesondere kann der Messfühler zur Messung der maximalen Höhe (h) von der der maximalen Höhe entsprechenden Fahrposition aus in wenigstens eine weitere Abtastpositionen verfahrbar sein. Vorzugsweise weisen zwei Fahrpositionen den gleichen Abstand zu der erstgenannten Fahrposition auf.

Die sich für beide Fahrpositionen ergebenden Werte der Höhe und Fahrweglänge bzw. des daraus berechneten Durchmessers können gemittelt werden.

In der bevorzugten Ausführungsform der Erfindung umfasst der Haltebügel längliche, sich senkrecht zu der durch den Bügel aufgespannten Ebene erstreckende Fußteile, die im Querschnitt vorzugsweise kreisrund sind.

An den Fußteilen können in dessen Längsrichtung zueinander im Abstand angeordnete Berührungsschalter angebracht sein, die eine genaue Ausrichtung der Fußteile parallel zur Zylinderachse bzw. Drehachse des Werkstücks ermöglichen. Die korrekte Ausrichtung der Fußteile wird durch den Aus- oder Anschaltzustand beider Berührungsschalter angezeigt.

In weiterer vorteilhafter Ausgestaltung der Erfindung können Einrichtungen zur Befestigung des Haltebügels am Werkstück vorgesehen sein, vorzugsweise erfolgt die Befestigung über die Fußteile, möglich sind z.B. Halteriemen oder Magnetelemente.

Die Erfindung wird nachfolgend anhand eines Ausführungsbeispiels und der beiliegenden, sich auf dieses Ausführungsbeispiel beziehenden Zeichnungen weiter erläutert. Es zeigen:
- Fig. 1: eine an ein rundzylindrisches Werkstück angesetzte Messvorrichtung nach der Erfindung in perspektivischer Darstellung,
- Fig. 2: die Messvorrichtung von Fig. 1 in Explosionsdarstellung, und
- Fig. 3 und 4: die Funktionsweise der Vorrichtung von Fig. 1 und 2 erläuternde Darstellungen.

Eine Vorrichtung 1 zur Messung des Durchmessers oder Radius eines rundzylindrischen Werkstücks 2 umfasst einen Haltebügel 3 mit einer Grundplatte 4. Der Haltebügel 3 ist über längliche, bolzenförmige Fußteile 5 und 6 an das Werkstück 2 anlegbar. Die Längsachsen der Fußteile 5 und 6 erstrecken sich senkrecht zur Plattenebene der Grundplatte 4.

An der Grundplatte 4 ist ein elektromechanischer Messtaster 7 angebracht, der über einen Tasterhalter 8 an einer Montageplatte 9 befestigt ist. Die Montageplatte 9 bildet einen entlang einer Führung 10 verfahrbaren Schlitten. Ein hoch genauer Stellantrieb 11 bewegt den Schlitten über eine Spindel 12. Die Schlittenführung 10 erstreckt sich parallel zu der Grundplatte 4 sowie parallel zu der kürzesten, die Längsachsen der Fußteile 5 und 6 senkrecht schneidenden Verbindungslinie zwischen den Längsachsen.

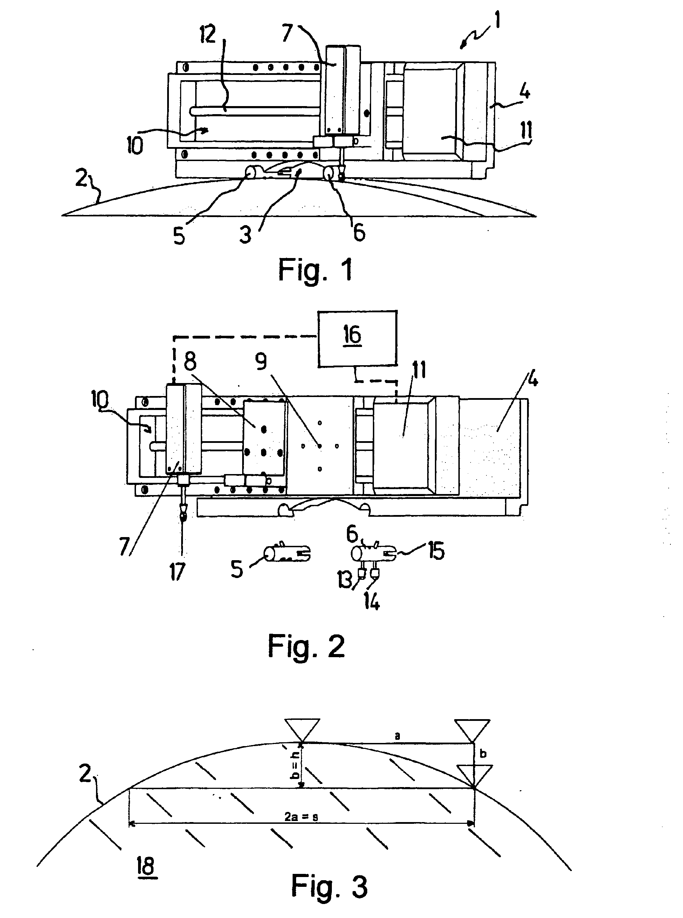

Wie Fig. 2 erkennen lässt, weisen die Fußteile 5 und 6 jeweils zwei, in Längsrichtung der Fußteile zueinander im Abstand angeordnete Berührungsschalter 13 und 14 auf. Eine Einschlitzung 15 an einem Ende der bolzenförmigen Fußteile erlaubt eine Befestigung der Vorrichtung am Werkstück, z.B. durch einen Spanngurt oder durch flache Magnetelemente.

Wie Fig. 2 ferner erkennen lässt, sind der elektromechanische Messtaster 7 und der Stellantrieb 11 mit einer Steuer- und Auswerteinrichtung 16 verbunden, die beispielsweise durch einen Personalcomputer gebildet sein kann.

Der Messtaster 7 weist eine Tastspitze 17 mit einer gegen das Werkstück 2 anlegbaren Rolle auf, deren Drehachse sich senkrecht zur Plattenebene der Grundplatte 4 erstreckt.

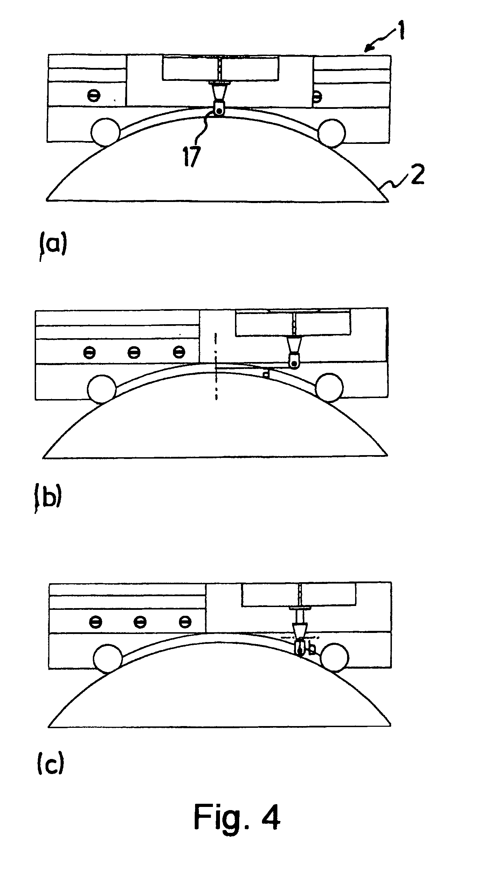

Zur Messung des Durchmessers oder Radius des Werkstücks 2 wird die Messvorrichtung 1 an das Werkstück 2 gemäß der in Fig. 4 gezeigten Anordnung an das Werkstück 2 angesetzt. Die Längsachsen der Fußteile 5 und 6 erstrecken sich parallel zur Zylinderachse des Werkstücks. Abweichungen von dieser Lage werden durch die Berührungsschalter 13,14 registriert, die sich nur bei korrekter Lage beide in Einschaltstellung befinden.

In einem ersten Schritt ermittelt die Steuer- und Auswerteinrichtung 16 durch Hin- und Herfahren des Messtasters 7 entlang der Schlittenführung 10 diejenige Fahrposition, in welcher das Messsignal des Messtasters 7 einen Extremwert annimmt und welche der in Fig. 4a gezeigten Stellung des Tastkopfs 17 entspricht.

Ausgehend von dieser in Fig. 4a gezeigten Fahrposition wird der Messtaster 7, gesteuert durch die Steuer- und Auswerteinrichtung 16, mit Hilfe des Stellantriebs 11 um die in Fig. 3 gezeigte Strecke a verschoben und das Werkstück 2 in der verschobenen Position durch den abgesenkten Tastkopf 17 erneut antastet. Aus der Änderung des Messsignals gegenüber der Ausgangsposition wird, wie in Fig. 3 gezeigt ist, die Strecke b gemessen. Die Strecke b ist gleich der maximalen Höhe h des die betreffende Querschnittsfläche 18 des Werkstücks 2 begrenzenden Kreisbogenabschnitts über der zugehörigen Sehne, deren Länge s gleich 2a beträgt. Unter Zugrundelegung der Formel r = (4h² + s²)/8h berechnet die Steuer- und Auswerteinrichtung 16 dann die Radiuslänge r des Werkstücks 2.

Zur Erhöhung der Messgenauigkeit lässt sich der Messtaster 7 zusätzlich um die gleiche Entfernung a in der entgegengesetzten Richtung verfahren und nochmals die der Höhe h entsprechende Länge b ermitteln. Aus den beiden ermittelten Radiuswerten kann nun der Mittelwert berechnet werden.

Zur weiteren Erhöhung der Messgenauigkeit könnte die Steuer- und Auswerteinrichtung verschiedene Korrekturen durchführen. Unter Einbeziehung des Messsignals eines die Temperatur des Werkstücks erfassenden Temperaturfühlers ließe sich der ermittelte Messwert auf eine vorgegebene Normaltemperatur umrechnen.

Die ermittelte Fahrtstrecke entspricht nicht genau dem in Fig. 3 gezeigten Abstand a, weil die Rolle des Tastkopfes 17 zu dessen Mittelachse seitlich versetzt am Werkstück anliegt. Die Größe dieses Versatzes hängt von der Länge der gewählten Fahrstrecke und vom Radius ab. Auch hier kann die Steuer- und Auswerteinrichtung, z.B. über gespeicherte Korrekturfaktoren, einen korrigierten Wert a ermitteln.

Um das Verhältnis zwischen den Größen a und b im Hinblick auf eine optimale Messgenauigkeit möglichst konstant zu halten, wird mit zunehmender Größe des Werkstücks die Fahrstrecke a entsprechend vergrößert.

Obwohl die vorangehend beschriebene Messvorrichtung den Durchmesser bzw. den Radius nur indirekt über die Sehnenlänge und Kreisbogenhöhe ermittelt, lassen sich sehr hohe Messgenauigkeiten erzielen.

Es versteht sich, dass sich die Vorrichtung an unterschiedliche Messbedingungen anpassen lässt, wobei die Größe der Vorrichtung von dem maximal zu messenden Durchmesser abhängt. Auch lässt sich die Vorrichtung zur Messung größerer Bohrungen verwenden.
Die Messung von drei Punkten und die Berechnung des Durchmessers anhand dieser Punkte führt zu gleicher Messgenauigkeit wie eine Berechnung anhand der Kreisabschnittsformel.

## Patentansprüche

1. Vorrichtung (1) zur Messung des Durchmessers oder Radius eines rundzylindrischen, insbesondere durch eine Drehmaschine bearbeiteten Werkstücks (2), mit einem Haltebügel (3), der unter Ausrichtung zu einer das Werkstück (2) senkrecht zur Zylinderachse schneidenden Ebene an das Werkstück (2) ansetzbar ist, und einer mit dem Haltebügel (3) verbundenen Messeinrichtung zur Erfassung der Höhe (h) eines die Querschnittschnittfläche (18) des Werkstücks (2) in dieser Ebene begrenzenden Kreisbogenabschnitts über der Sehne dieses Kreisbogenabschnitts,
**dadurch gekennzeichnet,**
**dass** die Messeinrichtung einen auf dem Haltebügel (3) parallel zu der Sehne verfahrbaren Messfühler (7) umfasst.

2. Vorrichtung nach Anspruch 1,
**dadurch gekennzeichnet,**
**dass** die Messeinrichtung zur Erfassung der Höhe (h) des Kreisbogenabschnitts bei bekannter Länge (s) der Sehne oder/und die Messeinrichtung ferner zur Erfassung neben der Höhe (h) des Kreisbogenabschnitts auch der Länge (2a) der Sehne ausgebildet ist.

3. Vorrichtung nach Anspruch 1 oder 2,
**dadurch gekennzeichnet,**
**dass** der Messfühler ein elektromechanischer Messtaster (7) ist.

4. Vorrichtung nach Anspruch 3,
**dadurch gekennzeichnet,**
**dass** der Messfühler (7) durch einen Stellantrieb (11) über eine vorgegebene Fahrweglänge, ggf. unter laufender Erfassung der Fahrweglänge, verfahrbar ist.

5. Vorrichtung nach Anspruch 3 oder 4,
**dadurch gekennzeichnet,**
**dass** eine ein Signal des Messfühlers (7) auswertende Einrichtung (16) vorgesehen ist, welche die Fahrposition des Messfühlers (7) ermittelt, bei welcher der Kreisbogenabschnitt seine maximale Höhe (h) aufweist.

6. Vorrichtung nach Anspruch 5,
**dadurch gekennzeichnet,**
**dass** der Messfühler (7) zur Messung der maximalen Höhe (h) von der der maximalen Höhe (h) entsprechenden Fahrposition aus in wenigstens eine weitere, in bekanntem Abstand (a) zu dieser Fahrposition liegende Fahrposition verfahrbar ist.

7. Vorrichtung nach Anspruch 6,
**dadurch gekennzeichnet,**
**dass** die Auswerteinrichtung zur Bildung des Mittelwertes aus mehreren Messwerten der maximalen Höhe (h) vorgesehen ist.

8. Vorrichtung nach einem der Ansprüche 1 bis 7,
**dadurch gekennzeichnet,**
**dass** der Haltebügel (3) längliche Fußteile (5,6) aufweist, deren Längsachse sich senkrecht zu der durch den Bügel aufgespannten Ebene erstreckt.

9. Vorrichtung nach Anspruch 8,
**dadurch gekennzeichnet,**
**dass** die Fußteile einen kreisrunden Querschnitt aufweisen.

10. Vorrichtung nach Anspruch 8 oder 9,
**dadurch gekennzeichnet,**
**dass** an den Fußteilen (5,6) in dessen Längsrichtung zueinander im Abstand angeordnete Berührungsschalter (13,14) angebracht sind.

11. Vorrichtung nach einem der Ansprüche 1 bis 10,
**dadurch gekennzeichnet,**
**dass** Einrichtungen zur Befestigung des Haltebügels (3) an einem Werkstück (2), vorzugsweise über die Fußteile, vorgesehen sind.

## Claims

1. Device (1) for measuring the diameter or radius of a circularly cylindrical workpiece (2), in particular one machined by a turning machine, having a mounting bracket (3) which can be placed on the workpiece (2) so as to be aligned with a plane intersecting the workpiece (2) at right angles to the cylinder axis, and having a measuring device connected to the mounting bracket (3) for registering the height (h) of a circular arc section delimiting the cross-sectional area (18) of the workpiece (2) in this plane via the chord of this circular arc section,
**characterized in that**
the measuring device comprises a measuring feeler (7) that can be moved parallel to the chord on the mounting bracket (3).

2. Device according to Claim 1,
**characterized in that**
the measuring device is designed to register the height (h) of the circular arc section, given a known length (s) of the chord, and/or the measuring device is further designed to register the length (2a) of the chord in addition to the height (h) of the circular arc section.

3. Device according to Claim 1 or 2,
**characterized in that**
the measuring feeler is an electromechanical measuring sensor (7).

4. Device according to Claim 3,
**characterized in that**
the measuring feeler (7) can be moved by an actuating drive (11) over a predefined length of travel, if appropriate with continuous registration of the length of travel.

5. Device according to Claim 3 or 4,
**characterized in that**
a means (16) evaluating a signal from the measuring feeler (7) is provided, determining the travel position of the measuring feeler (7) at which the circular arc section has its maximum height (h).

6. Device according to Claim 5,
**characterized in that**
the measuring feeler (7) for measuring the maximum height (h) can be moved out from the travel position corresponding to the maximum height (h) to at least one further travel position located at a known distance (a) from the said travel position.

7. Device according to Claim 6,
**characterized in that**
the evaluation device is provided to form the average from a plurality of measured values of the maximum height (h).

8. Device according to one of Claims 1 to 7,
**characterized in that**
the mounting bracket (3) has elongated foot parts (5, 6), the longitudinal axis of which extends at right angles to the plane spanned by the bracket.

9. Device according to Claim 8,
**characterized in that**
the foot parts have a circular cross section.

10. Device according to Claim 8 or 9,
characterized that
contact switches (13, 14) are fitted to the foot parts (5, 6), arranged at a distance from one another in the longitudinal direction of the latter.

11. Device according to one of Claims 1 to 10,
**characterized in that**
means are provided for fixing the mounting bracket (3) to a workpiece (2), preferably via the foot parts.

## Revendications

1. Dispositif (1) pour la mesure du diamètre ou du rayon d'une pièce à usiner (2) cylindrique ronde, en particulier usinée par un tour, présentant un étrier de fixation (3) qui peut être posé sur la pièce à usiner (2) avec une orientation par rapport à un plan coupant la pièce à usiner (2) perpendiculairement à l'axe du cylindre et un dispositif de mesure relié à l'étrier de fixation (3) destiné à enregistrer la hauteur (h) d'une partie d'arc de cercle limitant la section de coupe transversale (18) de la pièce à usiner (2) dans ce plan via la corde de cette partie d'arc de cercle, **caractérisé en ce que** le dispositif de mesure comporte un capteur (7) pouvant être déplacé parallèlement à la corde sur l'étrier de fixation (3).

2. Dispositif selon la revendication 1, **caractérisé en ce que** le dispositif de mesure est conçu pour enregistrer la hauteur (h) de la partie d'arc de cercle à une longueur connue (s) de la corde et/ou le dispositif de mesure est en outre conçu pour enregistrer, en plus de la hauteur (h) de la partie d'arc de cercle, également la longueur (2a) de la corde.

3. Dispositif selon la revendication 1 ou 2, **caractérisé en ce que** le capteur est un palpeur de mesure (7) électromécanique.

4. Dispositif selon la revendication 3, **caractérisé en ce que** le capteur (7) peut être déplacé par un servomoteur (11) sur une longueur de parcours prédéfinie, le cas échéant avec un enregistrement continu de la longueur du parcours.

5. Dispositif selon la revendication 3 ou 4, **caractérisé en ce qu'**un dispositif (16) d'évaluation d'un signal du capteur (7) est prévu, qui détermine la position de déplacement du capteur (7) à laquelle la partie d'arc de cercle présente sa hauteur (h) maximale.

6. Dispositif selon la revendication 5, **caractérisé en ce que** le capteur (7) peut être déplacé, pour la mesure de la hauteur (h) maximale, à partir de la position de déplacement correspondant à la hauteur (h) maximale dans au moins une autre position de déplacement se trouvant à une distance (a) connue par rapport à cette position de déplacement.

7. Dispositif selon la revendication 6, **caractérisé en ce que** le dispositif d'évaluation est prévu pour former la valeur moyenne de plusieurs valeurs de mesure de la hauteur (h) maximale.

8. Dispositif selon l'une quelconque des revendications 1 à 7, **caractérisé en ce que** l'étrier de fixation (3) présente des pièces de base allongées (5,6), dont l'axe longitudinal s'étend perpendiculairement par rapport au plan par lequel passe l'étrier.

9. Dispositif selon la revendication 8, **caractérisé en ce que** les pièces de base présentent une section circulaire.

10. Dispositif selon la revendication 8 ou 9, **caractérisé en ce que** des commutateurs de contact (13,14), disposés à une certaine distance l'un de l'autre dans le sens longitudinal des pièces de base (5,6), sont disposés sur celles-ci.

11. Dispositif selon l'une quelconque des revendications 1 à 10, **caractérisé en ce que** des dispositifs pour la fixation de l'étrier de fixation (3) sont prévus sur une pièce à usiner (2), de préférence via les pièces de base.
